# EUROPÄISCHE PATENTSCHRIFT

(11) **EP 2 563 634 B1**
(45) Veröffentlichungstag und Bekanntmachung des Hinweises auf die Patenterteilung: **26.03.2014**
(21) Anmeldenummer: 11718000.0
(22) Anmeldetag: 27.04.2011
(51) Int. Cl.: B60W 20/00, B60W 10/26, B60W 10/06, B60W 10/08, B60W 50/00, B60L 15/20, B60L 11/12, B60K 6/46

(54) **Verfahren zum Betreiben eines Elektrofahrzeuges**
Method for operating an electric vehicle
Procédé pour entraîner un véhicule électrique

(30) Priorität: 29.04.2010 AT 7142010
(43) Veröffentlichungstag der Anmeldung: 06.03.2013
(73) Patentinhaber: AVL List GmbH, 8020 Graz (AT)
(72) Erfinder: FRAIDL, Günter Karl, A-8020 Graz (AT); KAPUS, Paul, A-8111 Judendorf (AT); KORMAN, Matjaz, 2000 Maribor (SI); BENDA, Vincent, A-8047 Hart Bei Graz (AT)
(74) Vertreter: Babeluk, Michael
(86) Internationale Anmeldenummer: PCT/EP2011/056647
(87) Internationale Veröffentlichungsnummer: WO 2011/134992

(56) Entgegenhaltungen:
- EP-A2- 1 270 303
- AT-A2- 506 272
- DE-A1- 10 128 758
- FR-A1- 2 811 268
- US-A- 5 892 346

## Beschreibung

Die Erfindung betrifft ein Verfahren nach dem Oberbegriff des Anspruchs 1 zum Betreiben eines Elektrofahrzeuges, welches zumindest eine elektrische Antriebsmaschine, zumindest einen elektrischen Energiespeicher, sowie zumindest eine insbesondere durch einen Range-Extender gebildete Stromerzeugungseinrichtung aufweist, wobei die Stromerzeugungseinrichtung in Abhängigkeit des Ladezustandes des elektrischen Energiespeichers und der Fahrtroute aktiviert wird.

Es ist bekannt, mit Range-Extender-Einheiten, welche aus einer Brennkraftmaschine und einer Generatoreinheit bestehen, die Reichweite von Elektrofahrzeugen zu erweitern, indem bei nicht mehr ausreichender Batterieladung die elektrische Energie für den elektromotorischen Fahrantrieb durch einen sogenannten, durch eine Brennkraftmaschine gebildeten, Range-Extender generiert wird. Um unter allen Betriebszuständen ausreichende elektrische Leistung zur Verfügung stellen zu können, müsste dabei die Leistung des Range-Extenders ähnlich der elektrischen Antriebsleistung ausgelegt werden. Dies bedingt jedoch vergleichsweise hohes Gewicht, Kosten und Abmessungen der Range-Extender-Einheit. Da der Range-Extender im allgemeinen jedoch nur einen Bruchteil der Gesamtbetriebsdauer eines Elektrofahrzeuges in aktivem Betrieb ist und den Großteil der Betriebsdauer des Elektrofahrzeuges nur ein inaktives Zusatzgewicht darstellt, stellt eine Größen- und Gewichtsminimierung der Range-Extender-Einheit ein ganz wesentliches Ziel dar.

Dies kann zum Beispiel dadurch erfolgen, dass die Range-Extender-Leistung nicht auf die Maximalleistung des elektrischen Fahrantriebes ausgelegt wird, sondern lediglich auf die wesentlich niedrigere mittlere erforderliche Antriebsleistung bzw. die für Erreichen der Dauer-Höchstgeschwindigkeit erforderliche Leistung. Darüber hinausgehender Energiebedarf wird aus einer vorgehaltenen Energiereserve abgedeckt. Diese Energiereserve muss jedoch so ausgelegt werden, dass im praktischen Fahrbetrieb nie ein Leistungsmangel auftreten kann (zum Beispiel bei langen Autobahnsteigungen, Passfahrten, etc.). Je genauer dieser Spitzenlastbedarf vorhergesagt werden kann, desto kleiner und damit verbrauchs- und kostengünstiger kann sowohl die Range-Extender-Einheit, als auch der Energiespeicher des Elektrofahrzeuges ausgelegt werden.

Zwei Arten der Range-Extender-Steuerung sind bekannt:
1. So genannte SOC-basierte Range-Extender-Steuerung:
   Dabei wird die Einschaltstrategie primär durch den Ladezustand des elektrischen Energiespeichers (SOC... State of Charge) bestimmt. Das Zu- und Abschalten des Range-Extenders erfolgt zwischen zwei vordefinierten Schwellwerten. In verfeinerten Varianten wird dieser Schwellwert abhängig von Zusatzgrößen (zum Beispiel dem bisherigen Energie-/Leistungsbedarf, Batterietemperatur, etc.) entsprechend adaptiert.
2. Aktive GPS-basierte Range-Extender-Steuerung:
   Nach aktiver Eingabe des Fahrziels wird die Fahrtroute errechnet und mit Hilfe des erwarteten Geschwindigkeits- und Höhenprofils der Energiebedarf für die Fahrtroute berechnet. Damit kann der Einschaltzeitpunkt des Range-Extenders so festgelegt werden, dass einerseits auch bei kleiner Leistung des Range-Extenders auch auf langen Steigungen kein Leistungsmangel auftritt, andererseits die Betriebsdauer des Range-Extenders und damit der Verbrauch an fossilen Brennstoffen minimiert wird. Da jedoch in der Praxis die Fahrer im Regelfall bekannte Fahrziele nicht in das GPS-System (Global Positioning System) eingeben, ist der tatsächliche Nutzen einer solchen Steuerung begrenzt.

Aus der AT 506.272 A ist ein Verfahren zum Betreiben eines Elektrofahrzeuges bekannt, bei dem eine Stromerzeugungseinrichtung ab einem definierten Ladezustand des elektrischen Energiespeichers aktiviert wird. Die Stromerzeugungseinrichtung ist dabei für einen mittleren Leistungsbedarf der elektrischen Antriebsmaschine bei einer definierten Dauergeschwindigkeit des Elektrofahrzeuges in der Ebene ausgelegt, wobei die Stromerzeugungseinrichtung noch vor Erreichen einer unteren technischen Betriebsgrenze des Ladezustandes des elektrischen Energiespeichers bei einem definierten Einschaltladezustand aktiviert wird, welcher so bemessen ist, dass im Bezug auf die untere technische Betriebsgrenze eine Energiereserve im elektrischen Energiespeicher verbleibt, um Spitzenleistungen abdecken zu können. Der Einschaltladezustand kann dabei flexibel in Abhängigkeit eines Fahrzieles und/oder einer geplanten Fahrtroute festgelegt werden.

Aus der EP 1 225 074 A2 ist ein Serienhybridfahrzeug mit einem Elektromotor, einem Generator und einer den Generator antreibenden Brennkraftmaschine bekannt. Dabei wird innerhalb einer Zero-Emission-Zone das Fahrzeug rein elektrisch bei deaktivierter Brennkraftmaschine betrieben. Sowohl kurz vor dem Eintritt in die emissionsfreie Zone als auch beim Verlassen der emissionsfreien Zone wird der elektrische Energiespeicher durch die Brennkraftmaschine aufgeladen.

Die WO 2005/082663 A1 offenbart ein tragbares Stromaggregat für Elektrofahrzeuge, welches dazu ausgebildet ist, die Reichweite des Elektrofahrzeuges auszudehnen.

Aus der US 2009/015202 A ist ein Verfahren zur Laderegelung bei einem Hybridfahrzeug bekannt, wobei ein Sollladezustand als Mittelwert des Ladebereiches definiert wird. Der Energiefluss wird so geregelt, dass der Sollladezustand eingehalten wird. Durch Betreiben des elektrischen Antriebsmotors des Hybridfahrzeuges wird der Ladezustand von einem Sollwert abgesenkt und durch Generieren von elektrischer Energie mit der Brennkraftmaschine wieder angehoben.

Die WO 2008/128416 A1 offenbart ein Energiemanagement für Hybridfahrzeuge mit einem Lastvorhersagesystem, mit welchem aufgrund von Eingangsparametern und mittels eines selbstlernenden System ein künftiges Lastniveau berechnet wird, um aufgrund der Lastanforderung eine optimale zukünftige Ausgangsleistung, einen Batterieladezustand und eine optimale Fahrzeuggeschwindigkeit zu bestimmen. Aufgrund dieser optimalen zukünftigen Leistungsabschätzung werden die Brennkraftmaschine, der Generator und der elektrische Energiespeicher des Hybridfahrzeuges koordiniert.

Die JP 2008-201165 A beschreibt eine Steuereinheit für ein Hybridfahrzeug, wobei der Einschaltzeitpunkt des Motors in Abhängigkeit des Ladezustandes des Energiespeichers aufgrund der aufgezeichneten Daten von absolvierten Fahrten und aufgrund der aufgezeigten Fahreigenschaften eines identifizierten Fahrers festgelegt wird.

Aus der EP 2 172 740 A ist es bekannt, auf Grund des Ladezustandes eines Energiespeichers bei einem Hybridfahrzeug ein Reichweitenprofil mittels eines Navigationssystems zu bestimmen.

Die JP 2008 290610 A beschreibt eine Navigationseinrichtung für ein Hybridfahrzeug, welche alle möglichen Fahrtrouten zwischen eingegebenen Start- und einer Zieleingabe simulieren und den Kraftstoffverbrauch der Brennkraftmaschine bei jeder Fahrtroute bestimmt.

FR 2 811 268 A1 offenbart ein Verfahren nach dem Oberbegriff des Anspruchs 1.

Aufgabe der Erfindung ist es, die genannten Nachteile zu vermeiden und mit möglichst klein dimensionierten Stromerzeugungseinrichtungen eine große Reichweitenausdehnung bei Elektrofahrzeugen zu erreichen, auch wenn das Fahrziel nicht definiert wird.

Erfindungsgemäß wird dies dadurch erreicht, dass ausgehend von einem Bezugspunkt, welcher vorzugsweise dem Ausgangspunkt der Fahrtroute entspricht, innerhalb eines definierten Betrachtungshorizontes alle möglichen Fahrtrouten simuliert werden, und dass für jede der simulierten Fahrtrouten prospektiv ein Einschaltzeitpunkt der Stromerzeugungseinrichtung ermittelt wird, so dass bei Erreichen des Betriebshorizontes ein definierter Ladezustand des Energiespeichers erhalten bleibt.

Dadurch werden auch ohne aktive Eingabe eines Fahrzieles alle innerhalb des definierten Betrachtungshorizontes, beispielsweise der Fahrzeug-Gesamtreichweite liegenden möglichen Fahrtrouten und der daraus resultierende günstigste Einschaltzeitpunkt der Stromerzeugungseinrichtung berechnet. Die Vorgangsweise ähnelt dabei dem eines Schachcomputers, der auch jeden möglichen Schachzug vorab kalkuliert und den jeweils bestmöglichen Lösungsansatz berechnet.

Die Berechnung aller möglichen Fahrtrouten wird dabei bei jeder potentiellen Routenänderung aktualisiert. Dabei erfolgt permanent ein Abgleich des berechneten und des tatsächlichen Energiebedarfes.

Der Simulation aller möglichen Fahrtrouten werden vorteilhafter Weise Geschwindigkeitsprofile zugrunde gelegt, welche in Abhängigkeit der Straßenart, des Straßenzustandes, der Topographie, der Verkehrslage, der Außentemperaturen, der Wetterbedingungen und/oder der Tageszeit ermittelt werden. Besonders vorteilhaft ist es, wenn für alle möglichen Fahrtrouten jeweils ein prospektives Energieverbrauchsprofil erstellt und der Betrieb der Stromerzeugungseinrichtung auf der Basis dieses Energieverbrauchsprofils geplant wird, wobei vorzugsweise bei Erstellung des Energieverbrauchsprofils der aktuelle und der prospektive Energieverbrauch bei jeder Fahrtroute berücksichtigt wird. Weiters kann auch der bisherige Energieverbrauch auf dem zurückgelegten Abschnitt der Fahrtroute zur Ermittlung der Fahrzeugbeladung aus der bekannten Topografie herangezogen werden. Dabei wird der fahrerspezifische Energieverbrauch, sowie alle anderen Zusatzverbraucher wie Klimatisierungserfordernisse basierend auf Außentemperatur, Licht, Scheibenwischer, Scheiben- und Sitzheizung etc. für eine möglichst genaue Vorhersage des Energiebedarfes herangezogen.

Vorzugsweise ist vorgesehen, dass der Simulation der Fahrtrouten ein definiertes Fahrerprofil zugrunde gelegt wird, wobei vorzugsweise das Fahrerprofil aus dem Fahrbetrieb vergangener Fahrten abgeleitet wird.

Als Betrachtungshorizont kann die Fahrzeug-Gesamtreichweite herangezogen werden. Um den Simulationsaufwand zu verkleinern und die Rechenzeit zu verkürzen, kann vorgesehen sein, dass der Betrachtungshorizont aufgrund der Länge, Dauer und Ziel von vergangenen Fahrten abgeschätzt wird. Es ist aber auch möglich, den Ereignishorizont manuell vorzugeben bzw. voreinzustellen.

In einer besonders bevorzugten Ausführungsvariante der Erfindung ist vorgesehen, dass der jeweils aktuelle Aufenthaltsort des Elektrofahrzeuges einem neuen Bezugspunkt zugeordnet wird, und eine neue Simulation aller möglichen Fahrtrouten auf der Basis des neuen Bezugspunktes erfolgt. Als Betrachtungshorizont kann dabei der ursprüngliche Betrachtungshorizont verwendet werden. Es ist aber auch denkbar, dass der Betrachtungshorizont wie der Betrachtungspunkt dynamisch verändert wird.

Eine neue Zuordnung des Betrachtungspunktes und eine neue Simulation aller möglichen Fahrtrouten sollte zumindest bei Erreichen jeweils eines Knoten- oder Verzweigungspunktes des Straßennetzes durchgeführt werden.

Die besten Ergebnisse lassen sich im Rahmen der Erfindung dadurch erreichen, dass die Simulation der Fahrtrouten unter Einbeziehung eines Fahrzeugnavigationssystems und/oder eines Navigationssatellitensystems erfolgt.

In weiterer Ausgestaltung der Erfindung kann vorgesehen sein, dass der Einschaltzeitpunkt der vorzugsweise eine Brennkraftmaschine aufweisenden Stromerzeugungseinrichtung in Abhängigkeit des Wärmebedarfs am Fahrzeuges, vorzugsweise im Fahrzeuginnenraum, des elektrischen Energiespeichers, der elektrischen Antriebsmaschine, zumindest einer elektronischen Komponente und/oder zumindest eines Hilfsaggregates festgelegt wird. Der Wärmebedarf am Fahrzeug kann dabei einen größeren Einfluss auf die Festlegung des Einschaltzeitpunktes der Stromerzeugungseinrichtung haben, als die Erhaltung eines definierten Ladezustand des Energiespeichers bei Erreichen des Betrachtungshorizontes. Durch Einschalten der Stromerzeugungseinrichtung kann somit der Innenraum des Fahrzeuges, der elektrische Energiespeicher, die Antriebsmaschine und/oder weitere elektrische Komponenten oder Hilfsaggregate aufgewärmt werden, ohne den elektrischen Energiespeicher zu belasten. Die durch die Stromerzeugungseinrichtung erzeugte elektrische Energie wird dabei zum Aufladen des elektrischen Energiespeichers oder zum Antrieb des Fahrzeuges verwendet. Die Abwärme der luft- oder wassergekühlten Stromerzeugungseinrichtung wird zum Aufwärmen des Fahrzeuginnenraumes, des elektrischen Energiespeichers, der elektrischen Antriebsmaschine, zumindest einer elektronischen Komponente und/ oder zumindest eines Hilfsaggregates verwendet.

Um beispielsweise bei Kaltstart hohe Wärmebedarfanforderungen abdecken zu können, kann ab einem oberen Schwellwert für erhöhten Wärmebedarf die Forderung nach Erhaltung eines definierten Ladezustandes des Energiespeichers bei Erreichen des Betrachtungshorizontes ignoriert werden, bis der Wärmebedarf unter einen unteren Schwellwert sinkt. Hoher Wärmebedarf kann somit die Forderung nach Erhaltung eines definierten Ladezustandes des Energiespeichers bei Erreichen des Betrachtungshorizontes überlagern.

Das erfindungsgemäße Verfahren ermöglicht es, die Größe des Energiespeichers, sowie der Stromerzeugungseinrichtung zu minimieren, ohne dass dadurch Fahrleistungseinbußen entstehen. Trotzdem bleibt dabei der Einsatz des Range-Extenders in einem minimal erforderlichen Ausmaß und ermöglicht die Maximierung des rein netzgespeisten Batteriebetriebes.

Die Erfindung wird im Folgenden anhand der Figuren näher erläutert. Es zeigen:
- Fig. 1: eine bekannte ladezustandsabhängige Betriebsstrategie für ein Elektrofahrzeug;
- Fig. 2: eine bekannte fahrtroutenabhängige Betriebsstrategie für ein Elektrofahrzeug; und
- Fig. 3: ein Energieverbrauchsprofil des erfindungsgemäßen Verfahrens.

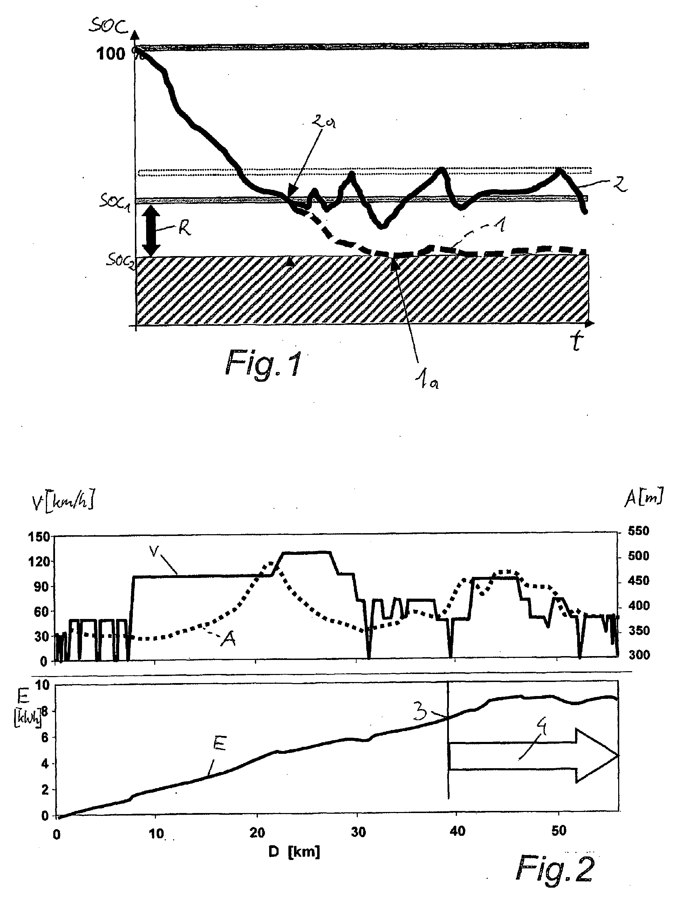

In Fig. 1 ist der Ladezustand SOC des elektrischen Energiespeichers des elektrisch angetriebenen Fahrzeuges über der Zeit t für eine bekannte ladezustandsabhängigen Betriebsstrategie aufgetragen. Mit SOC2 ist der technisch mögliche Minimalladezustand bezeichnet, welcher eine technische Untergrenze für die Fahrbarkeit des Elektrofahrzeuges darstellt. Nach Erreichen dieses Zustandes ist die verfügbare Fahrleistung unmittelbar von der Energiezufuhr der Stromerzeugungseinrichtung (Range Extender) abhängig und damit begrenzt. Dieser Fall ist mit der strichlierten Linie angedeutet. Der Punkt 1a zeigt den Einschaltzeitpunkt der Stromerzeugungseinrichtung.

Die Linie 2 zeigt eine zweite Betriebsstrategie, bei der die Stromerzeugungseinrichtung bereits aktiviert wird, sobald der Einschaltladezustand SOC1 im Punkt 2a erreicht wird. Dabei werden nur mehr Energieanforderungen, welche über die Leistung der Stromerzeugungseinrichtung hinausgehen, aus der Energiereserve R des elektrischen Energiespeichers genommen. Dabei wird die Stromerzeugungseinrichtung nicht erst an der technischen Untergrenze SOC2 des elektrischen Energiespeichers, sondern im Bereich eines mittleren ersten Ladezustandes - dem Einschaltladezustand SOC1 - aktiviert, sodass eine restliche Energiereserve R im Energiespeicher verbleibt. Durch die Definition des Einschaltladezustandes SOC1 oberhalb der technischen Untergrenze SOC2, die nach Erreichen den Ladevorgang durch die Stromerzeugungseinrichtung auslöst, kann die Begrenzung der abgerufenen Fahrleistung durch Pufferung über die Energiereserve R bis an die Systemlimits erweitert werden. Damit können temporäre Spitzenleistungen, wie Beschleunigungen oder Steigungen abgedeckt werden, ohne die Leistung der Stromerzeugungseinrichtung für die Spitzenlast, sondern nur für eine mittlere Leistung zu dimensionieren.

Fig. 2 zeigt den Fall einer fahrtroutenabhängigen, GPS-basierten Betriebsstrategie für die Stromerzeugungseinrichtung (Range-Extender) eines Elektrofahrzeuges. Dabei ist die Geschwindigkeit v, die Höhe A, sowie benötigte Energie E des Fahrzeuges über der Streckenlänge D einer Fahrtroute R über zum Beispiel 57 km aufgetragen. Nach aktiver Eingabe des Fahrziels wird die Fahrtroute errechnet und mit Hilfe des erwarteten Geschwindigkeits- und Höhenprofils der Energiebedarf E für die Fahrtroute berechnet. Damit kann der Einschaltzeitpunkt 3 des Range-Extenders so festgelegt werden, dass einerseits bei kleiner Leistung des Range-Extenders auch auf langen Steigungen kein Leistungsmangel auftritt, andererseits die durch den Pfeil 4 angedeutete Betriebsdauer des Range-Extenders und damit der Verbrauch an fossilen Brennstoffen minimiert wird. Da jedoch in der Praxis die Fahrer im Regelfall bekannte Fahrziele nicht in das GPS-System eingeben, ist der tatsächliche Nutzen einer solchen Steuerung begrenzt.

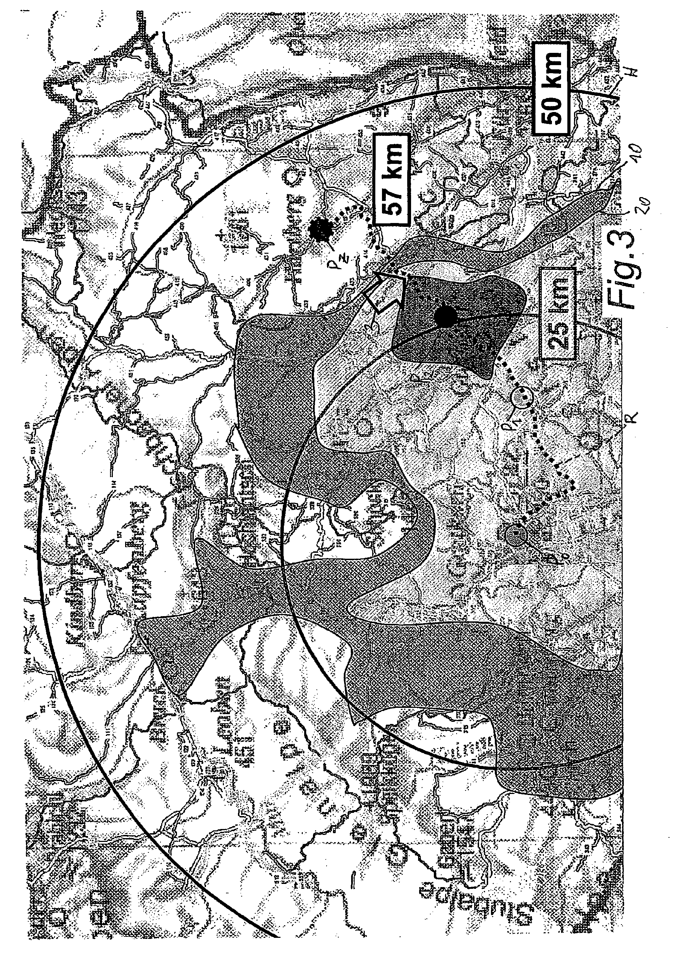

Die Fig. 3 zeigt schematisch eine Straßenkarte mit einer tatsächlich vom Elektrofahrzeug gefahrenen Fahrtroute R, wobei mit P₀ der Ausgangspunkt, mit P₁ und P₂ charakteristische Knotenpunkte und mit P_{Z} das Fahrziel bezeichnet ist. Wenn dem System der Zielort nicht bekannt ist, wird eine Simulation für alle möglichen Fahrtrouten durchgeführt Dabei wird am Ausgangspunkt P₀ der momentane Aufenthaltsort des Elektrofahrzeuges als Bezugspunkt für die Simulation herangezogen. Ausgehend von diesem Bezugspunkt werden sämtliche in Frage kommenden Fahrtrouten innerhalb des Betrachtungshorizontes H berücksichtigt. Für jede der simulierten Fahrtrouten wird prospektiv ein Einschaltzeitpunkt der Stromerzeugungseinrichtung ermittelt, so dass bei Erreichen des Betriebshorizontes H ein definierter Ladezustand des Energiespeichers erhalten bleibt. Die Linie 10 gibt dabei die technische Grenze des rein elektrischen Fahrbetriebes. Das Feld 20 zeigt das Gebiet an, in welchem die Simulation die Aktivierung des Range-Extenders vorsieht, um innerhalb des Betrachtungshorizontes H am Zielort einen definierten Ladezustandes SOC nicht zu unterschreiten. Das Feld 30 Somit wird die an Hand der Fig. 2 erläuterte fahrtroutenbasierte Betriebsstrategie auf alle möglichen Fahrtrouten erweitert.

Durch die Simulation aller möglichen Fahrtrouten werden auch ohne aktive Eingabe eines Fahrzieles alle innerhalb des definierten Betrachtungshorizontes H, beispielsweise der Fahrzeug-Gesamtreichweite, liegenden möglichen Fahrtrouten und der daraus resultierende günstigste Einschaltzeitpunkt der Stromerzeugungseinrichtung berechnet. Die Berechnung aller möglichen Fahrtrouten wird dabei bei jeder potentiellen Routenänderung, also in jedem Knotenpunkt oder Verzweigungspunkt P₁, P₂ des Straßennetzes auf der tatsächlich gefahrenen Fahrtroute R, aktualisiert. Dabei erfolgt permanent ein Abgleich des berechneten und des tatsächlichen Energiebedarfes.

Der Simulation aller möglicher Fahrtrouten werden Geschwindigkeitsprofile zugrunde gelegt, welche in Abhängigkeit der Straßenart, des Straßenzustandes, der Topographie, der Verkehrslage, der Außentemperaturen, der Wetterbedingungen und/oder der Tageszeit ermittelt werden. Für alle möglichen Fahrtrouten wird jeweils ein prospektives Energieverbrauchsprofil erstellt und der Betrieb der Stromerzeugungseinrichtung auf der Basis dieses Energieverbrauchsprofils geplant, wobei bei Erstellung des Energieverbrauchsprofils der aktuelle und der prospektive Energieverbrauch bei jeder Fahrtroute berücksichtigt wird. Dabei wird der fahrerspezifische Energieverbrauch, sowie alle anderen Zusatzverbraucher wie Klimatisierungserfordernisse basierend auf Außentemperatur, Licht, Scheibenwischer, Scheiben- und Sitzheizung etc. für eine möglichst genaue Vorhersage des Energiebedarfes herangezogen. Die Informationen über Straßenzustand, Verkehrslage, Wetter, etc. können über Internet, Verkehrsfunk, Telematik oder dgl. bereitgestellt werden.

Der Simulation der Fahrtrouten kann ein definiertes Fahrerprofil) zugrunde gelegt werden, wobei das Fahrerprofil automatisch aus dem Fahrbetrieb vergangener Fahrten abgeleitet, manuell eingegeben oder übe eine Personenidentifikationseinrichtung erfasst werden kann.

Als Betrachtungshorizont kann beispielsweise die Fahrzeug-Gesamtreichweite herangezogen werden. Es ist aber auch möglich den Betrachtungshorizont aufgrund der Länge, Dauer und Ziel von vergangenen Fahrten abzuschätzen oder manuell vorzuwählen.

Insbesondere bei Kreuzungspunkten entlang der gefahrenen Fahrtroute kann der jeweils aktuelle Aufenthaltsort des Elektrofahrzeuges einem neuen Bezugspunkt zugeordnet, und eine neue Simulation aller möglichen Fahrtrouten auf der Basis des neuen Bezugspunktes erfolgen. Als Betrachtungshorizont kann dabei der ursprüngliche Betrachtungshorizont H weiter verwendet werden. Es ist aber auch denkbar, dass der Betrachtungshorizont zusammen mit dem Betrachtungspunkt dynamisch verändert wird.

Zweckmäßigerweise erfolgt die Simulation der Fahrtrouten unter Einbeziehung eines Fahrzeugnavigationssystems und/oder eines Navigationssatellitensystems.

Das erfindungsgemäße Verfahren ermöglicht es, ohne dass der Fahrer Informationen zum Zielort eingeben muss, die Größe des Energiespeichers, sowie der Stromerzeugungseinrichtung zu minimieren, ohne dass dadurch Fahrleistungseinbußen entstehen. Trotzdem bleibt dabei der Einsatz des Range-Extenders in einem minimal erforderlichen Ausmaß und ermöglicht die Maximierung des rein netzgespeisten Batteriebetriebes.

Insbesondere in Ballungsräumen wie Großstädten mit einer Vielzahl von relativ nahe benachbarten Kreuzungen kann eine Vereinfachung des Verfahrens sinnvoll sein, um den Rechenaufwand und die Rechendauer in einem vertretbaren Rahmen zu halten. Dabei reicht es aus, wenn nur solche möglichen relevanten Fahrtrouten berechnet werden, welche die Betriebsweise des Range Extenders beeinflussen. Zum Beispiel werden dabei insbesondere Fahrtrouten mit unterschiedlicher Topografie, Verkehrslage oder Straßenart (z.B. Stadtautobahnen) berücksichtigt.

## Patentansprüche

1. Verfahren zum Betreiben eines Elektrofahrzeuges, welches zumindest eine elektrische Antriebsmaschine, zumindest einen elektrischen Energiespeicher, sowie zumindest eine insbesondere durch einen Range-Extender gebildete Stromerzeugungseinrichtung aufweist, wobei die Stromerzeugungseinrichtung in Abhängigkeit des Ladezustandes des elektrischen Energiespeichers und der Fahrtroute (R) aktiviert wird, wobei ausgehend von einem Bezugspunkt, welcher vorzugsweise einem Ausgangspunkt (P₀) der Fahrtroute entspricht, für zumindest eine Fahrtroute prospektiv ein Einschaltzeitpunkt der Stromerzeugungseinrichtung ermittelt wird, **dadurch gekennzeichnet, dass** innerhalb eines definierten Betrachtungshorizontes (H) alle möglichen Fahrtrouten simuliert werden, und dass für jede der simulierten Fahrtrouten prospektiv ein Einschaltzeitpunkt der Stromerzeugungseinrichtung ermittelt wird, so dass bei Erreichen des Betrachtungshorizontes (H) ein definierter Ladezustand des Energiespeichers erhalten bleibt.

2. Verfahren nach Anspruch 1, **dadurch gekennzeichnet, dass** der Simulation der Fahrtrouten ein definiertes Fahrerprofil zugrunde gelegt wird, wobei vorzugsweise das Fahrerprofil aus dem Fahrbetrieb vergangener Fahrten abgeleitet wird.

3. Verfahren nach Anspruch 1 oder 2, **dadurch gekennzeichnet, dass** der Simulation aller möglichen Fahrtrouten Geschwindigkeitsprofile zugrunde gelegt werden, welche in Abhängigkeit der Straßenart, des Straßenzustandes, der Topographie, der Verkehrslage, der Außentemperaturen, der Wetterbedingungen und/oder der Tageszeit ermittelt werden.

4. Verfahren nach einem der Ansprüche 1 bis 3, **dadurch gekennzeichnet, dass** für alle möglichen Fahrtrouten jeweils ein prospektives Energieverbrauchsprofil erstellt und der Betrieb der Stromerzeugungseinrichtung auf der Basis dieses Energieverbrauchsprofils geplant wird.

5. Verfahren nach einem der Ansprüche 1 bis 4, **dadurch gekennzeichnet, dass** bei der Erstellung des Energieverbrauchsprofils der vergangene, der aktuelle und/oder der prospektive Energieverbrauch bei jeder Fahrtroute berücksichtigt wird.

6. Verfahren nach Anspruch 4 oder 5, **dadurch gekennzeichnet, dass** bei der Erstellung des prospektiven Energieverbrauchsprofils der Wärmebedarf und/ oder Klimatisierungsbedarf im oder am Fahrzeug, vorzugsweise im Fahrzeuginnenraum, des elektrischen Energiespeichers, der elektrischen Antriebsmaschine, zumindest einer elektronischen Komponente und/oder zumindest eines Hilfsaggregates, mit berücksichtigt wird.

7. Verfahren nach einem der Ansprüche 4 bis 6, **dadurch gekennzeichnet, dass** bei der Erstellung des prospektiven Energieverbrauchsprofils die Außentemperatur, die Tageszeit und die Wetterbedingungen vorrausschauend für die Reiseroute mit berücksichtigt werden.

8. Verfahren nach einem der Ansprüche 4 bis 7, **dadurch gekennzeichnet, dass** bei der Erstellung des prospektiven Energieverbrauchsprofils zusätzlich zu allen für den Betrieb des Fahrzeuges zwingend notwendigen Stromverbrauchern, vorrausschauend für die Reiseroute auch fakultativ bedarfsweise einsetzbare Stromverbraucher, vorzugsweise Heizung, Klimaanlage, Gebläse, Scheibenheizung, Scheibenwischer, Beleuchtung und/oder Kommunikationseinrichtungen, mit berücksichtigt werden.

9. Verfahren nach einem der Ansprüche 1 bis 8, **dadurch gekennzeichnet, dass** der Betrachtungshorizont (H) aufgrund der Länge, der Dauer und/oder des Ziels von vergangenen Fahrten abgeschätzt wird.

10. Verfahren nach einem der Ansprüche 1 bis 9, **dadurch gekennzeichnet, dass** kontinuierlich oder diskontinuierlich der aktuelle Aufenthaltsort des Elektrofahrzeuges einem neuen Bezugspunkt zugeordnet wird, wobei vorzugsweise eine neue Zuordnung und Simulation aller möglichen Fahrtrouten bei Erreichen jeweils eines Knoten- oder Verzweigungspunkt (P₁, P₂) des Straßennetzes durchgeführt wird.

11. Verfahren nach einem der Ansprüche 1 bis 10, **dadurch gekennzeichnet, dass** die Simulation der Fahrtrouten unter Einbeziehung eines Fahrzeugnavigationssystems und/oder eines Navigationssatellitensystems erfolgt.

12. Verfahren nach einem der Ansprüche 1 bis 11, **dadurch gekennzeichnet, dass** als relevante Fahrtrouten solche Fahrtrouten definiert werden, welche die Betriebsstrategie der Stromerzeugungseinrichtung unterschiedlich beeinflussen.

13. Verfahren nach einem der Ansprüche 1 bis 12, **dadurch gekennzeichnet, dass** der Einschaltzeitpunkt der vorzugsweise eine Brennkraftmaschine aufweisenden Stromerzeugungseinrichtung in Abhängigkeit des Wärmebedarfs und/oder Klimatisierungsbedarfes am Fahrzeuges, vorzugsweise im Fahrzeuginnenraum, des elektrischen Energiespeichers, der elektrischen Antriebsmaschine, zumindest einer elektronischen Komponente und/oder zumindest eines Hilfsaggregates festgelegt wird.

14. Verfahren nach Anspruch 13, **dadurch gekennzeichnet, dass** der Wärmebedarf und/oder Klimatisierungsbedarfes am Fahrzeug einen größeren Einfluss auf die Festlegung des Einschaltzeitpunktes der Stromerzeugungseinrichtung hat, als die Erhaltung eines definierten Ladezustand des Energiespeichers bei Erreichen des Betrachtungshorizontes.

15. Verfahren nach Anspruch 13 oder 14, **dadurch gekennzeichnet, dass** ab einem oberen Schwellwert für erhöhten Wärmebedarf die Forderung nach Erhaltung eines definierten Ladezustandes des Energiespeichers bei Erreichen des Betrachtungshorizontes ignoriert wird, bis der Wärmebedarf unter einen unteren Schwellwert sinkt.

## Claims

1. A method for operating an electric vehicle, which comprises at least one electric driving motor, at least one electric energy storage unit, and at least one electric power generation device which is especially formed by a range extender, wherein the electric power generation device is activated depending on the charging state of the electric energy storage unit and the travel route (R), wherein an activation time of the electric power generation device is prospectively determined for at least one travel route on the basis of a reference point which preferably corresponds to a starting point (P₀) of the travel route, **characterised in that** all possible travel routes are simulated within a defined observation horizon (H), and an activation time of the electric power generation device is prospectively determined for each of the simulated travel routes, so that upon reaching the observation horizon (H) a defined charging state of the energy storage unit is maintained.

2. A method according to claim 1, **characterised in that** the simulation of the travel routes is based on a defined driver profile, wherein preferably the driver profile is derived from the driving operation of previous journeys.

3. A method according to claim 1 or 2, **characterised in that** the simulation of all possible travel routes is based on velocity profiles which are determined depending on the type of road, the state of the road, the topography, the traffic situation, the outside temperatures, the weather conditions and/or the time of day.

4. A method according to one of the claims 1 to 3, **characterised in that** one respective prospective energy consumption profile is produced for all possible travel routes and the operation of the electric power generation device is planned on the basis of said energy consumption profile.

5. A method according to one of the claims 1 to 4, **characterised in that** the past, the current and/or the prospective energy consumption is considered for each travel route in the preparation of the energy consumption profile.

6. A method according to claim 4 or 5, **characterised in that** the need for heat and/or the need for air conditioning in or on the vehicle, preferably in the interior of the vehicle, for the electric energy storage unit, the electric driving motor, at least one electronic component and/or at least one auxiliary unit is also considered in the preparation of the prospective energy consumption profile.

7. A method according to one of the claims 4 to 6, **characterised in that** the outside temperature, the time of day and the weather conditions are also considered in an anticipatory manner for the travel route in the preparation of the prospective energy consumption profile.

8. A method according to one of the claims 4 to 7, **characterised in that** current consumers which can be used optionally as required such as preferably the heating, air-conditioning system, fans, window heaters, windshield wipers, illumination and/or communication devices are also considered in an anticipatory manner in the preparation of the prospective energy consumption profile and in addition to all current consumers which are mandatory for the operation of the vehicle.

9. A method according to one of the claims 1 to 8, **characterised in that** the observation horizon (H) is estimated on the basis of the length, the duration and/or the destination of prior journeys.

10. A method according to one of the claims 1 to 9, **characterised in that** the current location of the electric vehicle is assigned a new reference point continuously or discontinuously, wherein preferably a new allocation and simulation of all possible travel routes is performed upon reaching an interchange or branch-off point (P₁, P₂) of the road network.

11. A method according to one of the claims 1 to 10, **characterised in that** the simulation of the travel routes occurs by including a vehicle navigation system and/or a navigation satellite system.

12. A method according to one of the claims 1 to 11, **characterised in that** such travel routes are defined as relevant travel routes which influence the operating strategy of the electric power generation device in a different way.

13. A method according to one of the claims 1 to 12, **characterised in that** the activation time of the electric power generation device, which preferably comprises an internal combustion engine, is determined depending on the need for heat and/or the need for air conditioning in the vehicle, preferably in the interior of the vehicle, for the electric energy storage unit, the electric driving motor, at least one electronic component and/or at least one auxiliary unit.

14. A method according to claim 13, **characterised in that** the need for heat and/or the need for air conditioning in the vehicle has a higher influence on the determination of the activation time of the electric power generation device than the maintenance of a defined charging state of the energy storage unit upon reaching the observation horizon.

15. A method according to claim 13 or 14, **characterised in that** from an upper threshold value for increased need for heat the demand for maintaining a defined charging state of the energy storage unit is ignored upon reaching the observation horizon until the need for heat falls beneath a bottom threshold value.

## Revendications

1. Procédé de gestion d'un véhicule électrique qui comporte au moins un appareil d'entrainement électrique, au moins un accumulateur d'énergie électrique et au moins un dispositif de production de courant en particulier formé par un prolongateur d'autonomie ou Range-Extender, le dispositif de production de courant étant activé en fonction de l'état de charge de l'accumulateur d'énergie électrique et du trajet de déplacement (R), selon lequel, à partir d'un point de référence qui correspond de préférence au point de départ (Po) du trajet de déplacement, on détermine un instant de connexion prévisionnel du dispositif de production de courant pour au moins un trajet,
**caractérisé en ce qu'**
à l'intérieur d'un horizon d'observation (H) défini tous les trajets de déplacement possibles sont simulés, et pour chacun des trajets de déplacement simulés, un instant de connexion prévisionnel du dispositif de production de courant est déterminé de sorte que, lorsque l'on a atteint l'horizon d'observation (H) un état de charge défini de l'accumulateur d'énergie reste maintenu.

2. Procédé conforme à la revendication 1,
**caractérisé en ce que**
la simulation du trajet de déplacement est basée sur un profil de conducteur défini, ce profil de conducteur défini étant de préférence déduit de la gestion du déplacement de trajets précédents.

3. Procédé conforme à la revendication 1 ou 2,
**caractérisé en ce que**
la simulation de tous les trajets de déplacement possibles est basée sur des profils de vitesse qui sont déterminés en fonction du type de chaussée, de l'état de la chaussée, de la topographie, de la situation du trafic, des températures externes, des conditions météorologiques et/ou de l'heure de la journée.

4. Procédé conforme à l'une des revendications 1 à 3,
**caractérisé en ce que**
pour tous les trajets de déplacement possibles, un profil de consommation d'énergie prévisionnel respectif est établi, et le fonctionnement du dispositif de production de courant est planifié à partir de ce profil de consommation d'énergie.

5. Procédé conforme à l'une des revendications 1 à 4,
**caractérisé en ce que**
lors de l'établissement du profil de consommation d'énergie on tient compte, pour chacun des trajets de déplacement, de la consommation d'énergie précédente, de la consommation d'énergie actuelle et/ou de la consommation d'énergie prévisionnelle.

6. Procédé conforme à la revendication 4 ou 5,
**caractérisé en ce que**
lors de l'établissement du profil de consommation d'énergie prévisionnel on tient compte de la demande en chaleur et/ou en climatisation dans ou sur le véhicule, de préférence dans l'habitacle du véhicule, de l'accumulateur d'énergie, de l'appareil d'actionnement électrique, d'au moins un composant électronique et/ou d'au moins un groupe auxiliaire.

7. Procédé conforme à l'une des revendications 4 à 6,
**caractérisé en ce que**
lors de l'établissement du profil de consommation d'énergie prévisionnel on prend en considération de façon prédictive la température externe, l'heure du jour et les conditions météorologiques pour l'itinéraire.

8. Procédé conforme à l'une des revendications 4 à 7,
**caractérisé en ce que**
lors de l'établissement du profil de consommation d'énergie prévisionnel on tient en outre compte, en plus de tous les consommateurs de courant obligatoirement nécessaires pour le fonctionnement du véhicule, de manière prédictive pour l'itinéraire, en outre de consommateur de courant pouvant facultativement être mis en oeuvre en cas de besoin, par exemple le chauffage, le dispositif de climatisation, le ventilateur, le chauffage des vitres, l'essuie-glace, l'éclairage et/ou les dispositifs de communication.

9. Procédé conforme à l'une des revendications 1 à 8,
**caractérisé en ce que**
l'horizon d'observation (H) est évalué à partir de la longueur, de la durée et/ou du but de déplacements antérieurs.

10. Procédé conforme à l'une des revendications 1 à 9,
**caractérisé en ce qu'**
au lieu d'arrêt actuel du véhicule électrique est associé de manière continue ou discontinue un nouveau point de référence, de préférence, une nouvelle association et simulation de tous les trajets de déplacement possibles est mis en oeuvre lorsque l'on a respectivement atteint un échangeur ou un noeud (P₁, P₂) du réseau routier.

11. Procédé conforme à l'une des revendications 1 à 10,
**caractérisé en ce que**
la simulation des trajets de déplacement est effectuée en intégrant un système de navigation du véhicule et/ou un système de navigation par satellite.

12. Procédé conforme à l'une des revendications 1 à 11,
**caractérisé en ce que**
en tant que trajets de déplacement importants on définit les trajets de déplacement qui influencent différemment la stratégie de gestion du dispositif de production de courant.

13. Procédé conforme à l'une des revendications 1 à 12,
**caractérisé en ce que**
l'instant de connexion du dispositif de production d'énergie comportant de préférence un moteur à combustion interne est déterminé en fonction de la demande en chaleur et/ou de la demande en climatisation dans le véhicule, de préférence dans l'habitacle du véhicule, de l'accumulateur d'énergie électrique, de l'appareil d'entrainement électrique, d'au moins un composant électronique et/ou d'au moins un groupe auxiliaire.

14. Procédé conforme à la revendication 13,
**caractérisé en ce que**
la demande en chaleur et/ou la demande en climatisation dans le véhicule a une plus grande influence sur la fixation de l'instant de connexion du dispositif de production de courant que le maintien d'un état de charge défini de l'accumulateur d'énergie lorsqu'on atteint l'horizon d'observation.

15. Procédé conforme à la revendication 13 ou 14,
**caractérisé en ce qu'**
à partir d'une valeur de seuil haute d'une demande en chaleur augmentée, on ignore la nécessité du maintien d'un état de charge défini de l'accumulateur d'énergie lorsqu'on atteint l'horizon d'observation, jusqu'à ce que la demande en chaleur tombe au-dessous d'une valeur de seuil basse.
